# EUROPEAN PATENT APPLICATION

(11) **EP 1 433 972 A1**
(43) Date of publication of application: **30.06.2004**
(21) Application number: 02425797.4
(22) Date of filing: 23.12.2002
(51) Int. Cl.: F16D 55/228, F16D 65/847

(54) **Air operated disc brake**

(71) Applicant: Renova Srl, 20128 Milano (IT)
(72) Inventor: Re, Gianpiero, 20132 Milano (IT)
(74) Representative: Ferroni, Filippo

(57) **Abstract**

The invention relates to a disk brake for industrial applications, such as the braking of spindles or shafts from which reels of paper or other material are unwound.

The brake comprises one or more pliers (2) having the form of a parallelepiped, wherein there are thrusters (30-33) on which the brake lining is arranged and operated by pressurized fluid.

Advantageously, supplying of the fluid is carried out by means of valves (50, 51) and channels (54) arranged on the pliers (2) in a substantially radial position with respect to the disk (3), thereby leaving free spaces for mounting ventilation fans or further brakes with juxtaposed pliers.

## Description

The invention relates to a disk brake intended in particular, but not exclusively, for industrial applications, such as for example controlling the unwinding of large reels of paper and the like, or regulating the speed of impellers and flywheels.

At present two types of brakes are known for these applications.

The first type provides for a series of pliers arranged peripherally with respect to the disk, formed by respective pairs of pneumatic cylinders which are controlled by an electronic or also manual control system.

This type of brake has a complex structure since it requires a large number of pliers along the periphery of the disk, in order to obtain an efficient braking action.

Indeed, since each plier has overall dimensions determined by the presence of the pneumatic cylinder, for applying a good braking torque on the disk it is required to have a large number of pneumatic cylinders along the periphery thereof; in other words, with these brakes, it is not possible to achieve an efficient action with a single plier but it is instead required to provide a plurality of small size pliers which, however, result in a greater structural and functional complexity of the brake.

In order to improve this situation, Italian patent No. 1.286.922 in the name of the same Applicant of the present application discloses a disk brake wherein the plier has a geometrical form of a parallelepiped with an actuator piston therein, which is rectangular.

In this way it is possible to apply onto the latter a brake lining with a polygonal or, in any case, non-circular shape, which corresponds better to the area of the disk onto which the frictional force is applied; the result, therefore, is that with a single plier it is possible to exert a braking torque greater than in the preceding case, provided that the other conditions are the same (air pressure, overall dimensions, etc.).

The brake described in the abovementioned Italian patent is simple and reliable; however, it is unable to satisfy in an optimum manner the various situations which may arise in practice.

For example, the force exerted by the plier on the disk may be regulated only by varying the pressure of the air; this means that regulation of the braking action is rather limited, thereby reducing the applicational possibilities of the brake.

The present invention aims at improving the brake of the prior patent in the name of the Applicant, so that its performance are improved and consequently also its applicational possibilities are increased.

This object is achieved by a brake comprising a plier with actuators having parallelepiped geometrical form, wherein the piston is divided into elements which can be actuated independently of each other.

Furthermore, in accordance with a preferred embodiment, the brake comprises two pliers arranged symmetrically with respect to a diameter of the brake and between which a cooling fan may be mounted.

Further features of the invention will emerge more clearly from the description which is provided below, with reference to some non-limiting embodiments shown in the accompanying drawings wherein:
- Fig. 1 is a front view of a first embodiment of a brake according to the invention;
- Fig. 2 is a longitudinal section through the brake of Fig. 1;

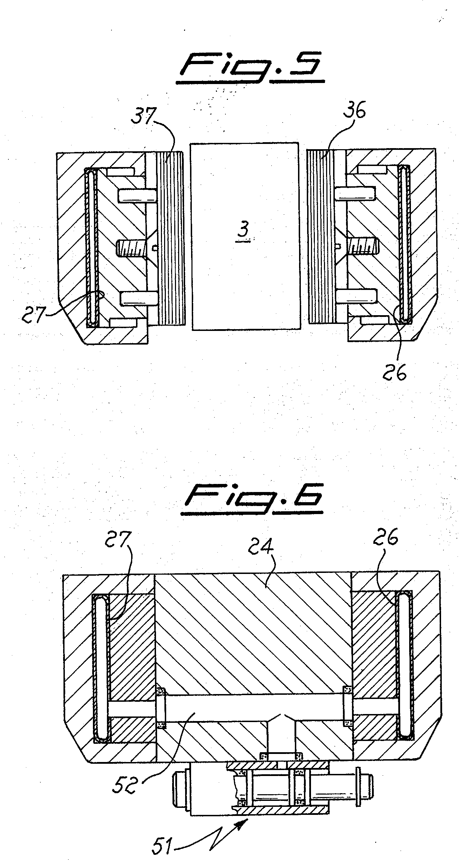

- Figs. 3, 4, 5 and 6 are respective cross-sections along the lines A-A, B-B, C-C and D-D of Fig. 2;
- Fig. 7 is a front view of a second example of a brake according to the invention;
- Fig. 8 is a cross-section along the line VIII-VIII of Fig. 6;
- Figs. 9 and 10 show a detail of the brake of Fig. 7;
- Fig. 11 shows a view, along the same sectional line as in Fig. 8, of a variant of the preceding brake.

With reference to the drawings, numeral 1 denotes in its entirety a brake according to the invention, which comprises a plier 2 arranged peripherally with respect to a disk 3 keyed onto a shaft (not shown).

The plier 2 comprises two external profiled parts 20, 21 which are held together, at the top and at the bottom, by two bolts 22 passing through respective spacers 23, 24; the edges 25a, 26a, 27a, 28a of respective tubular air chambers 25, 26, 27, 28 are gripped between the profiled parts 20, 21.

The tubular air chambers are housed in the interspace defined between the profiled parts 20, 21 and the thrusters 30, 31, 32, 33, on which a respective layer of braking material - or brake lining - 35, 36, 37, 38 is arranged.

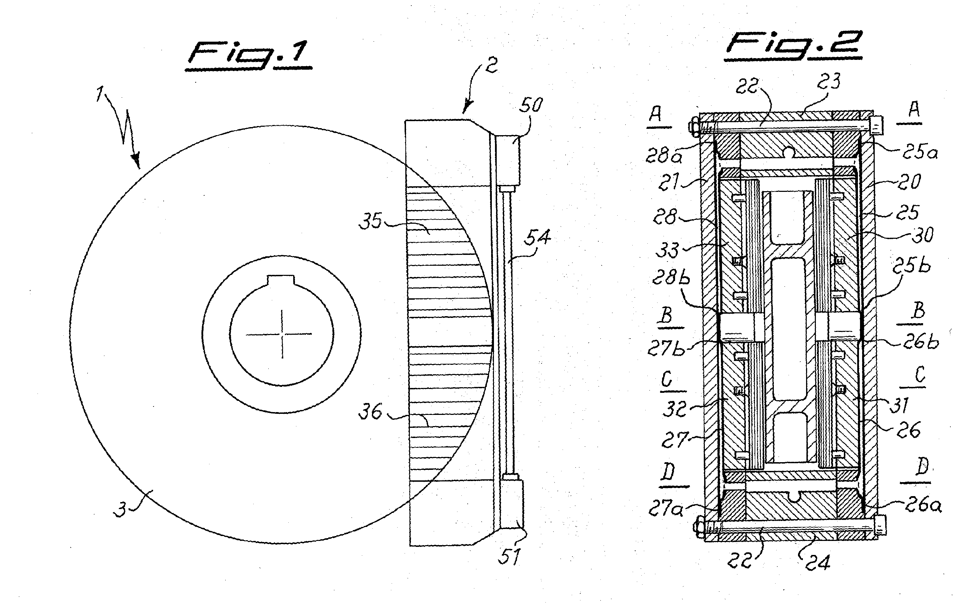

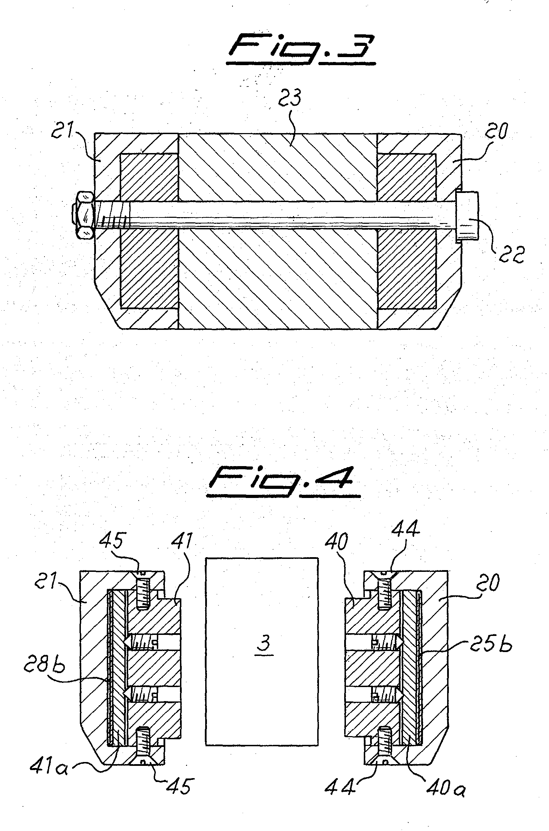

As can be seen in Fig. 1, the brake lining occupies substantially the area of a circle segment of the disk 3 (obviously on both sides even though in Fig. 1 only the front portions of the brake lining are visible), allowing an efficient braking force to be applied thereon.

A respective dividing piece 40, 41 is fixed in a middle position with respect to the profiled parts 20, 21 and has the function of keeping the other edge 25b, 26b, 27b, 28b of the air chambers 25-28 gripped; respective pairs of screws 44, 45 are used for fixing the dividing piece to the profiled part, while in accordance with a preferred embodiment each dividing piece has a movable part 40a, 41a which can be moved forwards by tightening dowels 46, 47 so as to adjust the compressive force acting on the edge of the air chambers.

Distribution valves 50, 51 are provided on the outside of the profiled parts for supplying the compressed air to the chambers 25-28 and are connected to the air chambers by means of corresponding manifolds 52, 53 incorporated in the spacers 23, 24; the air is also distributed to the valves by an external channel 54.

In the light of the foregoing description it is possible to understand the operating principle of the brake according to the invention.

Indeed, owing to the configuration of the plier 2 inside which the thrusters 30, 31, 32 and 33 can be independently actuated in opposite pairs by the respective air chambers 25, 26, 27 and 28, it is possible to obtain a modular braking action; in other words, with the brake 1 it is possible to exert a braking action on the disk 3 both using a single pair of opposite thrusters 21, 30 and 31, 32, or using both pairs.

It follows therefore that the braking action may be regulated, not only depending on the pressure of the air supplied into the air chambers, but also on the number of thrusters (and hence of the surface area of the brake lining) acting on the disk.

All of this is obtained with a simple and reliable structure of the plier, whose parallelepiped form allows the use of a brake lining configured as a circle segment of the disk.

It must also be emphasized that, as a result of the flat shape of the plier 2, it is possible to position another plier on the opposite side of the disk, thereby improving the abovementioned effects as a result.

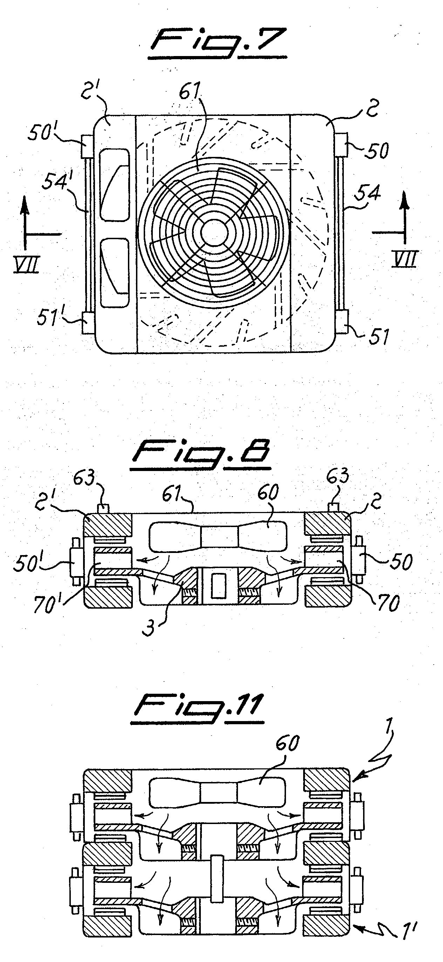

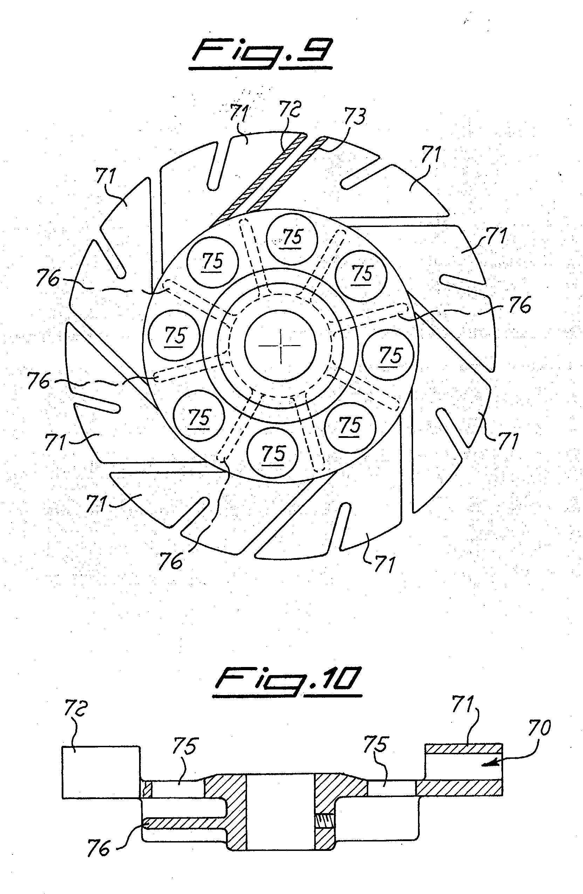

This is the case shown in Figures 7 to 10, where it is possible to see a second embodiment of brake according to the invention, provided with two pliers 2, 2' which are identical to those already described above.

As can be seen, this type of brake is particularly suitable for the application of a forced ventilation system; indeed, a fan 60 can be easily positioned between the two pliers 2, 2', keyed onto the same hub of the disk 3 or onto the shaft of the latter, and being protected externally by a grating 61 fixed to the two pliers 2, 2' by means of screws 63.

Furthermore, in accordance with a preferred embodiment the disk 3 no longer has the flat edge as in the first example, but instead has peripheral channels 70 defined between the surface of the disk 3 itself, and a plurality of flat segments 71 arranged frontally with respect thereto, as well as by side walls 72, 73.

In a radially more internal position with respect to the channels 70, the disk 3 of this second embodiment of the invention is provided with holes 75 adjacent to the blades 76 of the fan 60; in this manner a part of the air moved by the latter may pass axially through the disk and be used for ventilating another brake 1' associated with the first one, in a packed configuration such as that shown in Fig. 11.

This is indeed a further advantage achieved by the brake according to the invention: its modular nature arising from the possibility of arranging several brakes close to each other, operating on respective disks keyed onto a same shaft.

This is made possible by the shape of the pliers 2 and 2', which allows their arrangement next to each other, as well as by the fact that they are connected to the air supply source (a compressor, tank, etc.) by means of valves 50, 51 (50', 51') and channels 54 (54') arranged on the outer side of the pliers with respect to a radial direction of the disk.

It is obvious, however, that numerous variants are possible within the scope of this teaching.

For example it is possible to supply the valves 50, 51 (or 50', 51') independently, i.e. without connecting them together via the channel 54; it is also obvious that these valves could be arranged on the ducts (not shown in the drawings) which supply the air to the pliers, instead of on top of the latter.

In this case ordinary means (pipe fittings or the like) for connecting the pliers to the external air ducts would be sufficient on the outside thereof.

Likewise it is also possible to have other solutions as regards the way in which the air is distributed to the tubular chambers inside the pliers, or the shape of the latter and of the thrusters 30-33; in this case the manifolds 52, 53 formed in the spacers 23, 24 could be replaced by equivalent means.

Finally it must be pointed out that, in the brakes according to the invention, springs which are known per se (and therefore not shown in the drawings for the sake of simplicity) may also be provided, said springs being able to bring the thrusters 30-33 back into an initial rest condition when the chambers 25-28 are not active, i.e. after the air inside them has been discharged.

It should be merely noted that it is also possible to have brakes where, in the aforementioned rest condition, the thrusters are kept in a position removed from the disk, or brakes where, under the same conditions, the thrusters are pressed by the springs against the disk.

This second alternative is a typical safety solution which allows the disk to be braked also in the event of failure of the system supplying air to the pliers; a possible application, for example, could be a brake operating on a spindle on which a large reel is wound, as found in traditional paper production plants.

All of these variants fall nevertheless within the scope of the claims which follow.

## Claims

1. Disk brake comprising a plier (2) provided with at least one pair of thrusters (30, 33; 31, 32) equipped with a brake lining (35-38), which are active on opposite sides of a disk (3) and actuated by a pressurized operating fluid, **characterized in that** it comprises means (50, 51, 54) for connecting the plier to an external supply source of the operating fluid, arranged in a substantially radial position with respect to the disk.

2. Brake according to Claim 1, wherein each thruster (30-33) is associated with a respective air chamber (25-28) into which the operating fluid is supplied, thereby causing the movement of the thruster towards the disk (3).

3. Brake according to Claims 1 and 2, wherein the plier (2) comprises two pairs of opposite thrusters (30, 33; 31, 32) and wherein the area occupied by the layers of brake lining (36, 37) applied on the thrusters which operate on a same side of the disk (3), corresponds substantially to a circle segment of the disk (3).

4. Brake according to the preceding claims, wherein the plier (2) comprises a profiled part (20) having a substantially "U" shaped cross-section and housing internally the thrusters (30-33), and wherein the means (50, 51, 54) for connecting the plier to the external supply source of the operating fluid are arranged in the region of the central portion of the profiled part.

5. Brake according to Claim 4, comprising a second plier (2') as the first plier (2) and arranged in a position diametrically opposite thereto with respect to the disk (3).

6. Brake according to Claim 5, comprising a fan (60) which is rotationally integral with the disk (3) and housed between the two pliers (2, 2').

7. Brake according to Claim 6, wherein the disk (3) is provided peripherally with a plurality of ventilation ducts (70) defined between its surface and corresponding flat segments opposite thereto, and by side walls (72, 73) extending between the disk and the segments.

8. Brake according to Claim 7, wherein the disk (3) is provided with a plurality of holes (75) in a position which is radially internal with respect to the ducts (70).

9. Brake according to the preceding claims, wherein each plier (2, 2') is provided with springs acting on the thrusters (30-33) so as to cause their return movement into a rest condition.

10. Brake according to the preceding claims, wherein the means (50, 51, 54) for connecting the plier to the external supply source of the operating fluid comprises valves (50, 51) which distribute the fluid to the thrusters (30-33) by means of manifolds (52, 53) inside each plier (2).

11. Braking device comprising two brakes (1, 1') according to the preceding claims, arranged adjacent to each other with the respective pairs of pliers (2, 2') juxtaposed.
